# EUROPEAN PATENT SPECIFICATION

(11) **EP 2 084 417 B1**
(45) Date of publication and mention of the grant of the patent: **17.04.2013**
(21) Application number: 07835172.3
(22) Date of filing: 01.11.2007
(51) Int. Cl.: F16D 1/08, F16D 1/091, B23B 31/30

(54) **FRICTION COUPLING**
REIBKUPPLUNG
EMBRAYAGE À FRICTION

(30) Priority: 01.11.2006 SE 0602316
(43) Date of publication of application: 05.08.2009
(73) Proprietor: ETP TRANSMISSION AB, 581 11 Linköping (SE)
(72) Inventor: SÖDERLUND, Jens, 592 41 Vadstena (SE)
(74) Representative: Bokinge, Ole
(86) International application number: PCT/SE2007/000972
(87) International publication number: WO 2008/054294

(56) References cited:
- GB-A- 2 112 677
- US-A- 4 616 948
- US-A- 5 522 441

## Description

### Technical Field

The present invention relates to a friction coupling according to the preamble of claim 1 and to systems according to the preambles of claims 5 and 6.

### Technical Background

Friction couplings are used to provide a mechanical connection between two machine parts, which can generally be referred to as a shaft and a hub, the connection allowing power and/or torque to be transmitted between the shaft and the hub.

Shaft-and-hub joints are used for industrial purposes in various applications, for example in mechanical engineering, as tool holders (chucks) in machine tools, and as safety locks in hydraulic and pneumatic cylinders. Joints of this type often have to meet exacting requirements regarding precision, consecutive working properties and safety, while at the same time satisfying demands for a good overall economy, sufficient compactness and rapid assembly.

Friction couplings usually comprise an inner sleeve for frictional locking to a shaft surrounded by the inner sleeve, and an outer sleeve for frictional locking to a hub.

One type of known friction couplings comprises a pressure chamber, which by means of contact surfaces bearing against the sleeves transmits a force to said sleeves. By making the sleeves from an expandable material it is possible, using the pressure in the pressure chamber, to control a deformation of the sleeves to obtain frictional locking to a machine part which surrounds the sleeves or is housed in the sleeves, such as a hub or a shaft.

One example of a friction coupling of this kind is disclosed in SE-9701355-1. This document describes a hydraulic clamping bushing consisting of an expandable outer sleeve and an expandable inner sleeve, which are joined together at both ends and which define between them a circumferential gap forming a closed compressed fluid chamber which is filled with a hydraulic compressed fluid. The clamping bushing has at one end a collar, which is provided with a pressurising chamber and means for pressurising a compressed fluid contained in the compressed fluid chamber.

Another type of coupling comprising hydraulic pressurising of an expandable sleeve is disclosed in US 4,616,948. This document discloses a coupling comprising an annular chamber, which houses a matchingly tapered piston that is movable in the axial direction. Oil is pumped into one end of the chamber to move the piston axially in one direction to cause radial expansion of the chamber to connect two components, and oil is pumped into the other end of the chamber to move the piston axially in the opposite direction to disconnect the components.

An advantage of using pressure chambers in friction couplings is that the pressure is uniformly distributed via the compressed fluid over the entire boundary surface of the pressure chamber, which results in a uniform radial deformation of the part of the sleeve that has a contact surface against the pressure chamber, and thus a uniform frictional locking over the entire corresponding contact surface to the machine part.

A problem with the above friction coupling is that the inner sleeve and the outer sleeve are actuated simultaneously. This makes it impossible to adjust the hub while the friction coupling is locked relative to the shaft and vice versa.

One attempt to solve this problem is to provide a friction coupling having an inner pressure chamber adjacent the inner sleeve and an outer pressure chamber adjacent the outer sleeve and, between the pressure chambers, a substantially dimensionally stable intermediate sleeve.

A problem associated with this solution is crosstalk between the pressure chambers, which means that when adjusting the attachment to one machine part a relatively large play relative to the other machine part is required to avoid unintentional locking to this component due to the deformation in the direction of this machine part caused by the pressurisation. A large play, however, means a risk of tilting and axial run-out of the machine part, which would result in reduced precision and an increased risk of injury to people or damage to equipment.

Furthermore, it is desirable to be able to adjust the attachment of the coupling to one of the shaft and the hub, while maintaining the attachment to the other of the shaft and the hub. This would save time and effort for the operator of this kind of equipment.

A prior art coupling is known from GB-A-2 112 677.

### Summary

It is therefore an object to provide a friction coupling which, with increased precision, can be adjusted relative to one machine part without the need to increase the play relative to the other machine part. It is also an object to provide a friction coupling which can be adjusted relative to one machine part while at the same time maintaining the attachment to the other machine part.

To achieve the above objects a friction coupling and systems according to the appended independent claims are provided. Embodiments will be apparent from the sub-claims, and from the following description and the accompanying drawings referred to therein.

In a first aspect, a friction coupling according to claim 1 is provided.

In further aspects, friction couplings according to claims 5 and 6 are provided.

"Shaft" and "hub" are schematic designations. By "hub" is here meant any machine element. By "shaft" is correspondingly meant a machine element of any cross-section, which in its non-locked state can perform an axial and/or rotary movement relative to the hub.

The solution is based on the knowledge that a deformation of one of the inner sleeve and the outer sleeve is also transmitted to some extent through substantially dimensionally stable materials. This deformation is associated with considerable drawbacks when adjusting the setting of a friction coupling, since when adjusting one of the inner sleeve and the outer sleeve, also the other of the two may be affected. This means that one of the shaft and the hub may inadvertently be poorly connected to the coupling.

By arranging an expansion-absorbing gap, herein referred to as compensating gap, between the sleeve intended for deformation by the actuating means and the sleeve not intended for deformation by the actuating means, it is possible to prevent the setting of one of the sleeves from influencing the setting of the other of the sleeves.

A coupling of this kind allows adjustment and setting of one of the outer sleeve and the inner sleeve essentially without affecting the setting of the other of the inner sleeve and the outer sleeve. Thus, the play relative to the machine parts can be significantly reduced. This, in turn, reduces the risk of tilting and/or axial run-out and, thus, of injury to people and/or damage to equipment.

In addition, the solution saves time and effort for the machine operator, who can adjust and/or replace a machine part (i.e. a shaft or hub) in one of the inner sleeve and the outer sleeve of the coupling, without having once more to carry out the settings relative to a machine part in the other of the inner sleeve and the outer sleeve.

The inner sleeve is adapted to be radially deformed, the compensating gap being provided between said actuating means and the outer sleeve.

According to this embodiment, a friction coupling is provided whose inner sleeve can be set with the aid of an actuating means causing deformation of the inner sleeve essentially without deforming the outer sleeve.

There is also provided a system according to claim 5, which comprises a hub having an actuating means for frictional locking of the hub to the outer sleeve.

There is also provided a system according to claim 6, which comprises a shaft having an actuating means for frictional locking of the shaft to the inner sleeve.

An advantage of the above-described couplings is that their use is not limited to systems according to the above description. The couplings could also be used in systems in which machine parts are to be connected to the coupling by way of any other type of attachment, and where a small clearance, or play, between the machine part and the coupling is required.

In the embodiments described above, said actuating means may comprise a substantially annular gap containing a hydraulic liquid.

Hydraulic pressurisation is a tested and developed technique, which is advantageous when designing the different parts of the friction coupling.

As an alternative, said actuating means may comprise a substantially annular gap, in which a substantially annular piston is axially movable, the gap and the piston having at least one pair of cooperating conical surfaces.

This technique too is well known and therefore suitably combined with the features of the present solution.

Further advantages and features of the present friction coupling will be evident from the following description, reference being made to the drawings.

### Brief Description of the Drawings

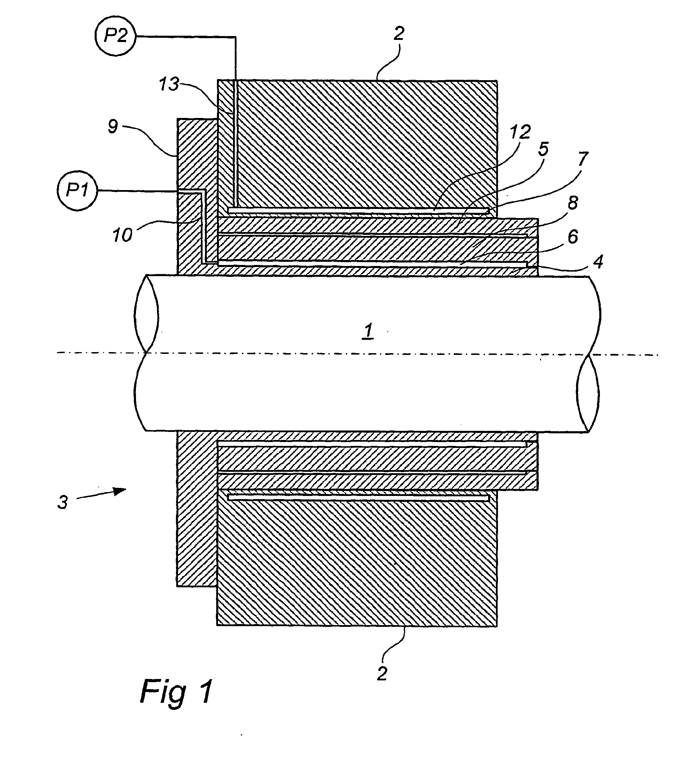

Fig. 1 is a schematic sectional view of a friction coupling 3 according to a first embodiment, in which the inner sleeve 4 is deformable and a compensating gap 7 is provided between the pressure gap 6 and the outer sleeve 5, so that the friction coupling can be locked relative to the shaft without also being locked relative to the hub 2.

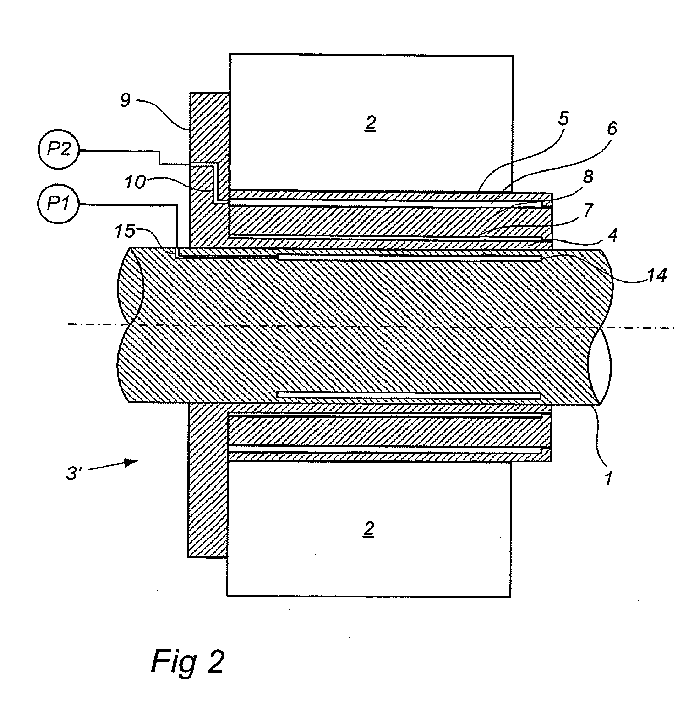

Fig. 2 is a schematic sectional view of a friction coupling 3' according to a second embodiment, wherein the outer sleeve 5 is deformable and wherein a compensating gap 7 is provided between the pressure gap 6 and the inner sleeve, such that the friction coupling can be locked relative to the hub 2, without also being locked relative to the shaft 1.

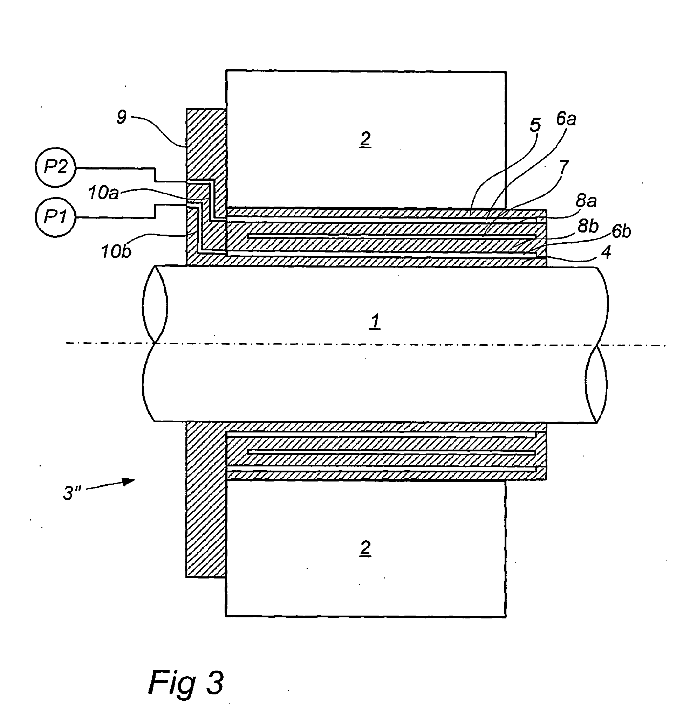

Fig. 3 is a schematic sectional view of a friction coupling 3" according to a third embodiment, wherein both the inner sleeve 4 and the outer sleeve 5 are individually deformable by means of the pressure gaps 6a and 6b, respectively, and wherein a compensating gap 7 is provided between outer 6a and inner 6b pressure gaps, such that the coupling can be locked relative to the shaft 1 or relative to the hub 2 independently of one another.

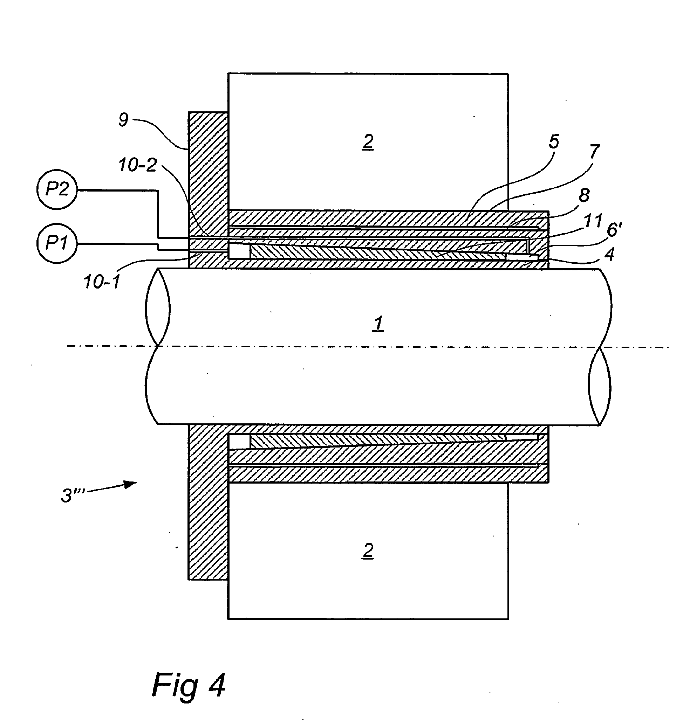

Fig. 4 is a schematic sectional view of a friction coupling 3"' according to a non-claimed variant, wherein the inner sleeve 4 is deformable and wherein a compensating gap 7 is provided between a gap 6 in which an annular piston 11 having at least one conical surface is axially movable, such that the friction coupling can be locked relative to the shaft without being therefore also locked relative to the hub 2.

### Description of Embodiments

Fig. 1 is a schematic sectional view of a friction coupling, generally designated 3, according to a first embodiment. In the example illustrated in Fig. 1 the friction coupling 3 is adapted to be locked relative to a shaft 1 as schematically illustrated, without also being locked to a hub 2 as schematically illustrated. Locking to the shaft 1 is achieved in the form of frictional locking between the inner circumferential surface of an annular inner sleeve 4 and an outer circumferential surface of the shaft 1. The inner sleeve 4 is radially deformable and the frictional locking of the inner sleeve 4 to the shaft 1 is actuated by means of an annular pressurisable gap 6 that extends along the shaft of the friction coupling and is defined by the outer circumferential surface of the inner sleeve 4 and an inner circumferential surface of an intermediate sleeve 8. In the following, the pressurisable gap 6 will be referred to as the "pressure gap". The pressure gap 6 contains a compressed fluid (not shown) and is connected via a duct 10 to a pressure source P1. The compressed fluid distributes the pressure uniformly over the whole wall surface of the pressure gap 6. The pressure is transmitted via the contact surfaces partly to the inner sleeve 4 and partly to the intermediate sleeve 8. Thus, a pressure increase in the pressure gap produces a radial deformation of the radially deformable inner sleeve 4, whose inner circumferential surface is thereby locked by friction to the outer circumferential surface of the shaft 1. Also the part of the wall surface of the pressure gap 6 that forms the contact surface against the intermediate sleeve 8 will be pressurised, which causes some deformation of the intermediate sleeve. To prevent this deformation from influencing the outer sleeve 5 as well, a compensating gap 7 is provided between the intermediate sleeve 8 and the outer sleeve 5 and substantially parallel therewith. The function of the compensating gap 7 is to absorb expansion so that the pressurisation of the inner sleeve 4 does not affect the geometry of the outer sleeve 5.

The compensating gap 7 ensures that the outer sleeve maintains substantially constant dimensions and shape, regardless of the adjustment of the inner sleeve 4.

In this embodiment, it is thus possible to reduce or increase the pressure in the pressure gap 6 to adjust the setting of the inner sleeve 4, while maintaining the setting of the outer sleeve 5.

The compensating gap 7 can be located at different distances from the pressure gap 6.

The intermediate sleeve 8 can be of varying thicknesses. It can be substantially dimensionally stable.

In one embodiment, the pressure gap 6 and the compensating gap 7 could be formed in one single sleeve made of a homogeneous and deformable material. The sleeve could, in turn, be surrounded by a substantially dimensionally stable outer sleeve.

In the case where frictional locking by means of pressurisation is to be achieved also between the outer sleeve 5 and the hub 2, the friction coupling described above can be integrated with a system according to Fig. 1, further comprising a hub 2 which is arranged for frictional engagement with said friction coupling, the hub 2 comprising a separate actuating means 12, in the example in the form of a pressure gap connected via a duct 13 to a pressure source P2 for actuating a frictional lock between the inner circumferential surface of said hub 2 and the outer sleeve 5. When pressurising the pressure gap 12, the hub 2 expands and is brought into frictional engagement with the circumferential surface of the outer sleeve 5. The pressurisation of the pressure gap 12 does not affect the frictional locking between the shaft 1 and the inner sleeve 4 owing to the expansion-absorbing compensating gap 7, which is adapted to prevent the radial expansion from propagating between the outer sleeve 5 and the inner sleeve 4.

The present system thus also enables separate adjustment of the frictional lock between the hub 2 and the outer sleeve 5, without affecting the lock between the inner sleeve 4 and the shaft 1. Accordingly, the system allows replacement or adjustment of one of the shaft 1 and the hub 2, while maintaining the coupling locked to the other of the shaft 1 and the hub 2.

In addition, the coupling could be used together with a hub which has another type of attachment to the coupling and/or another type of actuating means, in which a small clearance, or play, between the hub and the coupling is desirable.

In a second embodiment, the coupling could be designed as shown in Fig. 2, which is a schematic sectional view of a friction coupling 3', comprising an inner sleeve 4 adapted to engage with a shaft 1, an outer sleeve 5 adapted to engage with a hub 2, and an intermediate sleeve 8 arranged between the inner sleeve 4 and the outer sleeve 5. In the embodiment thus shown, an actuating means 6 for actuating frictional locking between the outer sleeve 5 and the hub 2 is provided in the form of a pressure gap adjacent the outer sleeve 5. A compensating gap 6 is provided adjacent the inner sleeve 4 for absorbing expansion changes of the intermediate sleeve 8 in connection with pressure changes in the pressure gap 6. In this manner changes in the geometry of the inner sleeve 4 due to pressure changes in the pressure gap 6 can be prevented.

It will be appreciated that the concept is the same as in the above-described embodiment shown in Fig. 1, the difference being that here the pressure gap 6 is adapted to pressurise the outer sleeve 5, thereby actuating frictional locking thereof to the hub.

The compensating gap 7 can be located at different distances from the pressure gap 6.

The intermediate sleeve 8 can be of varying thicknesses. It can be substantially dimensionally stable.

In one embodiment, the pressure gap 6 and the compensating gap 7 could be formed in one single sleeve made of a homogeneous and deformable material. The sleeve could, in turn, be surrounded by a substantially dimensionally stable outer sleeve.

Also this friction coupling could be integrated in a system in which a second pressure gap 14 is provided in a shaft 1 arranged for frictional engagement with the inner sleeve 4, as shown in Fig. 2. By pressurising the pressure gap 14 by means of a pressure source P1 via a duct 15, the circumferential surface of the shaft 1 is deformed in such manner that it can be brought into engagement with the inner sleeve 4 and be locked by friction to it.

In addition, the coupling could be used together with a shaft which has another type of attachment to the coupling and/or another type of actuating means, in which a small clearance, or play, between the shaft and the coupling is desirable.

It will be appreciated that the concept is the same as in the embodiment of a system described with reference to Fig. 1, the difference being that it is the frictional locking to the inner sleeve 4 that is adapted to be actuated by external actuating means, in this case a pressure chamber 14 provided in the shaft 1.

In both of the systems described above, each pressure gap 12, 14 can extend along the whole of the surface of the hub 2 and the shaft 1, respectively, that is to be locked by friction to respectively the outer sleeve 5 and the inner sleeve 4.

Furthermore, the design of the pressure gap 12, 14 can be adapted to the expansion properties and the geometry of respectively the hub 2 and the shaft 1 and/or respectively the outer sleeve 5 and the inner sleeve 4. If, for example, the hub 2 is made of a substantially dimensionally stable material, the pressure gap 12 can be located relatively close to the inner circumferential surface of the hub 2.

The pressure gap 12, 14 can contain the same type of compressed fluid as the pressure gap 6, or any other compressed fluid.

The pressure gap 12, 14 could be replaced with another type of actuating means, for example a piston, in conformity with that shown in Fig. 4.

The actuating means provided in either the shaft 1 or the hub 2 could actuate locking to the friction coupling in other ways than by deformation using a pressure chamber, for instance by locking using a screw joint.

Fig. 3 is a schematic sectional view of a third embodiment of a friction coupling 3" of the present kind. This coupling comprises an inner sleeve 4, an outer sleeve 5 and an intermediate sleeve 8 consisting of an outer portion 8a and an inner portion 8b. In this embodiment, an inner pressure gap 6b is provided between the inner sleeve 4 and the inner portion 8b of the intermediate sleeve and an outer pressure gap 6a is provided between the outer sleeve and the outer portion 8a of the intermediate sleeve. A compensating gap 7 is provided between said portions 8a and 8b. The inner pressure gap 6b is connected to a first pressure source P1 and the outer pressure gap is connected to a second pressure source P2. Frictional locking of the outer sleeve 5 to the hub 2 is achieved by increasing the pressure in the pressure chamber 6a. Frictional locking of the inner sleeve 4 to the shaft 1 is achieved by increasing the pressure in the pressure gap 6b. As described above in connection with previously described embodiments, the compensating gap 7 is intended for absorbing expansion, so as to prevent pressure increases in a pressure chamber adapted to be set relative to one of the hub and the shaft, and deformations associated therewith, from propagating and influencing the setting relative to the other of the shaft and the hub.

By "setting relative to a shaft or a hub" is here meant setting the inner sleeve and the outer sleeve, respectively, regardless of whether the sleeve is brought into engagement with a machine part or not, i.e. with or without a shaft and/or a hub.

An advantage of this embodiment is that it can as such be adapted and individually adjusted both towards the interior and towards the exterior without any substantial impact on the setting at the opposite side.

In one embodiment, more than one compensating gap could be provided between the pressure gaps.

The sleeves could be made of one single material or different materials. The different portions of the intermediate sleeve could be made from different materials. The pressurised fluid in the pressure gaps could be different for each pressure gap.

Fig. 4 shows yet a further embodiment of a coupling 3"'. This embodiment differs from the embodiments described above by the actuating means 6' comprising a substantially annular gap 6', in which a substantially annular piston 11 is axially movable, the gap 6' and the piston 11 having at least one pair of cooperating conical surfaces. The gap 6' is connected at one end via a duct 10-1 to a pressure source P1 and at the other end via a duct 10-2 connected to a pressure source P2. By increasing the pressure from P1, the piston 11 can be caused to move axially towards the narrowest end of the gap 6', which increases the pressure against the inner sleeve 4. The increased pressure produces a deformation of the inner sleeve 4 that causes it, when the pressure is sufficiently high, to be locked by friction to a shaft 1 housed in the inner sleeve.

The conical surfaces may be provided between the piston 11 and the inner sleeve 4 and/or between the piston 11 and the outer sleeve 5.

To release the inner sleeve 4 from the shaft 1, the pressure from P2 is increased in a corresponding manner, which causes the piston to move axially towards the widest part of the gap 6', thereby reducing the pressure applied to the inner sleeve.

To prevent these pressure changes from propagating also to the outer sleeve, thereby causing a change of its geometry, a compensating gap 7 is provided between the gap 6' and the outer sleeve 5.

In one embodiment, the piston could be arranged in the outermost position to act on the outer sleeve. In this case, a compensating gap could be provided between the piston and the inner sleeve.

In a further embodiment, a piston could be arranged to act on the outer sleeve and a piston arranged to act on the inner sleeve. In this case, a compensating gap could be provided between these two pistons.

In a variant of the embodiment shown in Fig. 4, the pressure chambers used to achieve the movement of the piston 11 can be located on the same side of the piston, seen in the axial direction, as disclosed in SE-0502056-5.

In all embodiments, the compensating gap 7 can be filled with any fluid that is suitable for the intended purpose, for instance air.

The compensating gap 7 can be closed or ventilated.

The compensating gap 7 can be of varying thicknesses. It can be thicker along the central portion and thinner along the edge portions so as to absorb a greater expansion in the central portion of the sleeve and a smaller expansion in the end portions of the sleeve.

The compensating gap 7 could be replaced with a plurality of substantially parallel pressure gaps.

## Claims

1. A friction coupling (3, 3', 3", 3"') for locking a shaft (1) relative to a hub (2), comprising
an inner sleeve (4), which is arranged for frictional engagement with the shaft (1),
an outer sleeve (5), which is arranged for frictional engagement with the hub (2), and
means (6; 6a, 6b; 6', 11) for actuating the friction coupling by radial deformation of at least one of the inner sleeve (4) and the outer sleeve (5),
wherein the outer sleeve (5) is adapted to be deformed in the radial direction by actuating a first actuating means (6a) and wherein the inner sleeve (4) is adapted to be deformed in the radial direction by actuating a second actuating means (6b),
**characterised by**
a compensating gap (7), which is arranged radially between said first and second actuating means (6a, 6b), and adapted to counteract radial deformation of the other of the inner sleeve (4) when actuating the first actuating means (6a) and to couteract radial deformation of the outer sleeve (5) when actuating the second actuating means (6b).

2. A friction coupling according to claim 1, wherein said actuating means comprises a substantially annular gap containing a hydraulic liquid.

3. A friction coupling according to claim 1, wherein said actuating means comprises a substantially annular gap (6'), in which an essentially annular piston (11) is axially movable, the gap (6') and the piston (11) having at least one pair of cooperating surfaces.

4. The friction coupling according to any one of claims 1-3, wherein the compensation gap is air-filled.

5. A system comprising a friction coupling (3, 3', 3", 3"') and a hub (2), the friction coupling being adapted for locking a shaft (1) relative to the hub (2),
the friction coupling comprising:
an inner sleeve (4), which is arranged for frictional engagement with the shaft (1),
an outer sleeve (5), which is arranged for frictional engagement with the hub (4), and
means (6;6') for actuating the friction coupling by radial deformation of the inner sleeve (4),
**characterised by**
the hub (2) comprising an actuating means (12) for frictional locking of the hub (2) to the outer sleeve (5), and
the friction coupling comprising a compensating gap (7), which is arranged radially between said means (6,6'), for actuating the friction coupling by radial deformation of the inner sleeve (4) and the outer sleeve (5), and which is adapted to counteract radial deformation of the outer sleeve (5) upon actuation of said means (6; 6') for actuating the friction coupling by radial deformation of the inner sleeve (4), and to counteract radial deformation of the inner sleeve upon actuation of said actuating means (12) for frictional locking of the hub (2) to the outer sleeve (5).

6. A system comprising a friction coupling (3, 3', 3", 3"') and a shaft (1), the friction coupling being adapted for locking the shaft (1) relative to a hub (2),
the friction coupling comprising:
an inner sleeve (4), which is arranged for frictional engagement with the shaft (1),
an outer sleeve (5), which is arranged for frictional engagement with the hub (4), and
means (6) for actuating the friction coupling by radial deformation of the outer sleeve (5),
**characterised by**
the shaft (2) comprising an actuating means (14) for frictional locking of the shaft (1) to the inner sleeve (4), and
the friction coupling comprising a compensating gap (7), which is arranged radially between said means for actuating the friction coupling by radial deformation of the outer sleeve (5) and the inner sleeve (4), and adapted to counteract radial deformation of the inner sleeve when actuating said means for actuating the friction coupling by radial deformation of the outer sleeve (5) and to counteract radial deformation of the outer sleeve (5) when actuating said actuating means (14) for frictional locking of the shaft (1) to the inner sleeve (4).

7. A system according to claim 5 or 6, wherein said actuating means comprises a substantially annular gap containing a hydraulic liquid.

8. A system according to claim 5 or 6, wherein said actuating means comprises a substantially annular gap (6'), in which an essentially annular piston (11) is axially movable, the gap (6') and the piston (11) having at least one pair of cooperating surfaces.

## Patentansprüche

1. Reibkupplung (3, 3', 3", 3 "') zur Befestigung einer Welle (1) bezüglich einer Nabe (2) aufweisend:
eine innere Manschette (4), die dazu ausgeführt ist, eine reibschlüssige Verbindung mit der Welle (1) einzugehen,
eine äußere Manschette (5), die dazu ausgeführt ist, eine reibschlüssige Verbindung mit der Nabe (2) einzugehen, und
Mittel (6; 6a, 6b; 6', 11) zum Betätigen der Reibkupplung durch eine radiale Verformung der inneren Manschette (4) und/oder der äußeren Manschette (5),
wobei die äußere Manschette (5) derart ausgestaltet ist, dass sie in der radialen Richtung durch Betätigen eines ersten Betätigungsmittels (6a) verformt wird, und wobei die innere Manschette (4) derart ausgestaltet ist, dass sie in der radialen Richtung durch Betätigen eines zweiten Betätigungsmittels (6b) verformt wird,
**dadurch gekennzeichnet, dass**
ein Ausgleichsspalt (7), der radial zwischen dem ersten und dem zweiten Betätigungsmittel (6a, 6b) angeordnet ist, und der dazu ausgestaltet ist, der radialen Verformung der inneren Manschette (4) entgegenzuwirken, wenn das erste Betätigungsmittel (6a) betätigt wird, und/oder der radialen Verformung der äußeren Manschette (5) entgegenzuwirken, wenn das zweite Betätigungsmittel (6b) betätigt wird.

2. Reibkupplung nach Anspruch 1, wobei das Betätigungsmittel einen im Wesentlichen ringförmigen Spalt aufweist, der eine Hydraulikflüssigkeit enthält.

3. Reibkupplung nach Anspruch 1, wobei das Betätigungsmittel einen im Wesentlichen ringförmigen Spalt (6') aufweist, in welchem ein im Wesentlichen ringförmiger Kolben (11) axial bewegbar ist, wobei der Spalt (6') und der Kolben (11) wenigstens ein Paar kooperierender Oberflächen aufweisen.

4. Reibkupplung nach einem der Ansprüche 1-3, wobei der Ausgleichsspalt mit Luft gefüllt ist.

5. System, das eine Reibkupplung (3,3',3",3"') und eine Nabe (2) aufweist, wobei die Reibkupplung dazu ausgestaltet ist, eine Welle (1) bezüglich der Nabe (2) zu befestigen, die Reibkupplung aufweisend:
eine innere Manschette (4), die dazu ausgeführt ist, eine reibschlüssige Verbindung mit der Welle (1) einzugehen,
eine äußere Manschette (5), die dazu ausgeführt ist, eine reibschlüssige Verbindung mit der Nabe (2) einzugehen, und
Mittel (6, 6') zum Betätigen der Reibkupplung durch radiale Verformung der inneren Manschette (4);
**dadurch gekennzeichnet, dass**
die Nabe (2) ein Betätigungsmittel (12) zur Befestigung der Nabe (2) durch Reibschluss an der äußeren Manschette (5) aufweist und
die Reibkupplung einen Ausgleichsspalt (7) aufweist, der radial zwischen dem Mittel (6, 6') zum Betätigen der Reibkupplung durch radiale Verformung der inneren Manschette (4) und der äußeren Manschette (5) angeordnet ist,
und der dazu ausgestaltet ist, bei Betätigung des Mittels (6, 6') zum Betätigen der Reibkupplung durch radiale Verformung der inneren Manschette (4) einer radialen Verformung der äußeren Manschette (5) entgegenzuwirken, und bei Betätigung des Betätigungsmittels (12) zur Befestigung der Nabe (2) durch Reibschluss an der äußeren Manschette (5) einer radialen Verformung der inneren Manschette entgegenzuwirken.

6. System, das eine Reibkupplung (3,3',3",3"') und eine Welle (1) aufweist, wobei die Reibkupplung dazu ausgestaltet ist, die Welle (1) bezüglich einer Nabe (2) zu befestigen, die Reibkupplung aufweisend:
eine innere Manschette (4), die dazu ausgeführt ist, eine reibschlüssige Verbindung mit der Welle (1) einzugehen,
eine äußere Manschette (5), die dazu ausgeführt ist, eine reibschlüssige Verbindung mit der Nabe (2) einzugehen, und
Mittel (6) zur Betätigung der Reibkupplung durch radiale Verformung der äußeren Manschette (5);
**dadurch gekennzeichnet, dass**
die Welle (1) ein Betätigungsmittel (14) zur Befestigung der Welle (1) durch Reibschluss an der inneren Manschette (4) aufweist, und
die Reibkupplung einen Ausgleichsspalt (7) aufweist, der radial zwischen dem Mittel zum Betätigen der Reibkupplung durch radiale Verformung der äußeren Manschette (5) und der inneren Manschette (4) angeordnet ist,
und der dazu ausgestaltet ist, einer radialen Verformung der inneren Manschette entgegenzuwirken, wenn das Mittel zum Betätigen der Reibkupplung durch radiale Verformung der äußeren Manschette (5) betätigt wird, und einer radialen Verformung der äußeren Manschette (5) entgegenzuwirken, wenn das Betätigungsmittel (14) zur Befestigung der Welle (1) durch Reibschluss an der inneren Manschette (4) betätigt wird.

7. System nach Anspruch 5 oder 6, wobei das Betätigungsmittel einen im Wesentlichen ringförmigen Spalt aufweist, der eine Hydraulikflüssigkeit enthält.

8. System nach Anspruch 5 oder 6, wobei das Betätigungsmittel einen im Wesentlichen ringförmigen Spalt (6') aufweist, in welchem ein im Wesentlichen ringförmiger Kolben (11) axial bewegbar ist, wobei der Spalt (6') und der Kolben (11) wenigstens ein Paar kooperierender Oberflächen aufweisen.

## Revendications

1. Embrayage à friction (3, 3', 3", 3"') pour le verrouillage d'un arbre (1) par rapport à un moyeu (2), comprenant
un manchon intérieur (4) qui est disposé pour l'engagement par friction avec l'arbre (1),
un manchon extérieur (5) qui est disposé pour l'engagement par friction avec le moyeu (2) et
des moyens (6 ; 6a, 6b ; 6', 11) pour l'actionnement de l'embrayage à friction par la déformation radiale d'au moins un manchon parmi le manchon intérieur (4) et le manchon extérieur (5),
dans lequel le manchon extérieur (5) est adapté pour être déformé dans la direction radiale en actionnant un premier moyen d'actionnement (6a) et dans lequel le manchon intérieur (4) est adapté pour être déformé dans la direction radiale en actionnant un second moyen d'actionnement (6b),
**caractérisé par**
une fente de compensation (7) qui est disposée radialement entre lesdits premier et second moyens d'actionnement (6a, 6b) et adaptée pour agir contre la déformation radiale de l'autre manchon intérieur (4) lors de l'actionnement du premier moyen d'actionnement (6a) et pour agir contre la déformation radiale du manchon extérieur (5) lors de l'actionnement du second moyen d'actionnement (6b).

2. Embrayage à friction selon la revendication 1, dans lequel lesdits moyens d'actionnement comprennent une fente sensiblement annulaire contenant un liquide hydraulique.

3. Embrayage à friction selon la revendication 1, dans lequel lesdits moyens d'actionnement comprennent une fente sensiblement annulaire (6'), dans laquelle un piston essentiellement annulaire (11) est mobile axialement, la fente (6') et le piston (11) présentant au moins une paire de surfaces concourantes.

4. Embrayage à friction selon l'une quelconque des revendications 1 à 3, dans lequel la fente de compensation est remplie d'air.

5. Système comprenant un embrayage à friction (3, 3', 3", 3"') et un moyeu (2), l'embrayage à friction étant adapté pour verrouiller un arbre (1) par rapport au moyeu (2),
l'embrayage à friction comprenant:
un manchon intérieur (4) qui est disposé pour l'engagement par friction avec l'arbre (1),
un manchon extérieur (5) qui est disposé pour l'engagement par friction avec le moyeu (4), et
des moyens (6 ; 6') pour l'actionnement de l'embrayage à friction par la déformation radiale du manchon intérieur (4),
**caractérisé par**
le moyeu (2) comprenant un moyen d'actionnement (12) pour son verrouillage par friction sur le manchon extérieur (5), et
l'embrayage à friction comprenant une fente de compensation (7) qui est disposée radialement entre lesdits moyens (6, 6') pour l'actionnement de l'embrayage à friction par la déformation radiale du manchon intérieur (4) et du manchon extérieur (5) et qui est adaptée pour agir contre la déformation radiale du manchon extérieur (5) suite à l'actionnement desdits moyens (6 ; 6') pour l'actionnement de l'embrayage à friction par la déformation radiale du manchon intérieur (4) et pour agir contre la déformation radiale du manchon intérieur suite à l'actionnement desdits moyens d'actionnement (12) pour le verrouillage par friction du moyeu (2) sur le manchon extérieur (5).

6. Système comprenant un embrayage à friction (3, 3', 3", 3"') et un arbre (1), l'embrayage à friction étant adapté pour verrouiller l'arbre (1) par rapport à un moyeu (2),
l'embrayage à friction comprenant :
un manchon intérieur (4) qui est disposé pour l'engagement par friction avec l'arbre (1),
un manchon extérieur (5) qui est disposé pour l'engagement par friction avec le moyeu (4), et
des moyens (6) pour l'actionnement de l'embrayage à friction par la déformation radiale du manchon extérieur (5),
**caractérisé par**
l'arbre (2) comprenant un moyen d'actionnement (14) pour le verrouillage par friction de l'arbre (1) sur le manchon intérieur (4), et
l'embrayage à friction comprenant une fente de compensation (7) qui est disposée radialement entre lesdits moyens pour l'actionnement de l'embrayage à friction par la déformation radiale du manchon extérieur (5) et du manchon intérieur (4) et adaptée pour agir contre la déformation radiale du manchon intérieur lors de l'actionnement desdits moyens pour l'actionnement de l'embrayage à friction par la déformation radiale du manchon extérieur (5) et pour agir contre la déformation radiale du manchon extérieur (5) lors de l'actionnement desdits moyens d'actionnement (14) pour le verrouillage par friction de l'arbre (1) sur le manchon intérieur (4).

7. Système selon la revendication 5 ou 6, dans lequel lesdits moyens d'actionnement comprennent une fente sensiblement annulaire contenant un liquide hydraulique.

8. Système selon la revendication 5 ou 6, dans lequel lesdits moyens d'actionnement comprennent une fente sensiblement annulaire (6'), dans laquelle un piston essentiellement annulaire (11) est mobile axialement, la fente (6') et le piston (11) présentant au moins une paire de surfaces concourantes.
